# EUROPÄISCHE PATENTSCHRIFT

(11) **EP 0 805 629 B1**
(45) Veröffentlichungstag und Bekanntmachung des Hinweises auf die Patenterteilung: **21.04.1999**
(21) Anmeldenummer: 95936373.0
(22) Anmeldetag: 16.11.1995
(51) Int. Cl.: A23C 13/10, A23L 1/19, A23L 1/24

(54) **NAHRUNGSMITTEL**
FOOD PRODUCT
PRODUIT ALIMENTAIRE

(30) Priorität: 12.01.1995 AT 7/95; 01.06.1995 AT 295/95
(43) Veröffentlichungstag der Anmeldung: 12.11.1997
(60) Teilanmeldung: 98119168.7
(73) Patentinhaber: HAMA Foodservice GesmbH, 5322 Hof bei Salzburg (AT)
(72) Erfinder: MANDL, Hans, X (AT); HAINDL, Rudolf, CH-6318 Walchwil (CH)
(74) Vertreter: Torggler, Paul Norbert
(86) Internationale Anmeldenummer: AT9500219
(87) Internationale Veröffentlichungsnummer: WO9621361

(56) Entgegenhaltungen:
- EP-A- 0 073 629
- EP-A- 0 399 580
- EP-A- 0 459 562
- WO-A-93/19611
- DE-A- 1 692 675
- DE-A- 1 949 650
- DE-A- 2 300 663
- DE-A- 3 319 072
- DE-A- 3 324 821
- FR-A- 2 005 794
- US-A- 1 605 009
- US-A- 2 170 417
- US-E- R E27 381

## Beschreibung

Die Erfindung betrifft ein Nahrungsmittel sowie ein Verfahren zu dessen Herstellung und Verwendungen desselben.

Auf dem Markt sind bereits die verschiedensten, in Verpackungen abgepackte Milchprodukte erhältlich.

Aufgabe der Erfindung ist es, ein neuartiges Nahrungsmittel zu schaffen, welches möglichst ungekühlt haltbar sein soll und sich durch zahlreiche, sowohl gewerbliche wie private Anwendungsmöglichkeiten auszeichnet.

Erfindungsgemäß ist zur Lösung dieser Aufgabe ein Nahrungsmittel gemäß Anspruch 1 vorgesehen,

Als besonders günstig für die Konsistenz und Haltbarkeit des neuartigen Nahrungsmittels hat sich herausgestellt, wenn mindestens 85% Rahm und zwischen 1% und 1,5% Gelatine verwendet werden.

Das neuartige Nahrungsmittel läßt sich ohne weitere aufwendige Zutaten so herstellen und verpacken, daß es über Monate ungekühlt haltbar ist. Das so verpackte Nahrungsmittel findet vor allem in der gewerblichen Küche als Halbfertigprodukt zahlreiche Anwendungsmöglichkeiten. Im allgemeinen wird man eine Mischung aus Rahm und Gelatine so wählen, daß das Milchprodukt bei Zimmertemperatur schnittfähig ist. Man kann es dann beispielsweise durch Herausstürzen aus der Verpackung aus dieser entnehmen. Man kann dann dieses Produkt in diesem halbfesten Zustand beispielsweise Torten, Aufstrichen, Cremen, Soßen oder Eis beifügen. Es ist grundsätzlich auch pur eßbar. Weiters besteht die Möglichkeit, das erfindungsgemäße Milchprodukt durch Erwärmen zu verflüssigen, anschließend zu verarbeiten, wobei bei einer darauffolgenden Abkühlung wieder eine Verfestigung eintritt. In einer bevorzugten Ausführungsform besteht das Milchprodukt bzw. das ganze Nahrungsmittel im wesentlichen nur aus Rahm und Gelatine. Es bildet somit ein geschmacksneutrales Halbfertigprodukt für die gewerbliche Küche.

Gemäß einem weiteren Ausführungsbeispiel können dem Rahm und der Gelatine weiters Zucker und Vanilleschoten zugefügt sein. Auch dieses Produkt läßt sich als Halbfertigprodukt in der gewerblichen Küche verwenden. Es schmeckt insbesondere bei einem Gesamtgehalt von Zucker und Vanilleschoten von 8% bis 15% auch pur gut (Fertigprodukt, welches sich insbesondere auch zur Abgabe an private Kunden eignet).

Als Rahm eignet sich insbesondere Rahm mit einem Fettanteil zwischen 10% und 25%, vorzugsweise bei 15%. Dieser Fettanteil liegt günstigerweise niedriger als der von üblichem Rahm mit 36% Fett.

Zur Erzielung einer langen Lagerzeit können an sich bekannte Verpackungen und besondere Herstellungsverfahren herangezogen werden.

Was die Verpackungen betrifft, können diese beispielsweise - wie an sich bekannt - aus Karton und/oder Papier bestehen, der mit Aluminium und/oder Kunststoff (vorzugsweise Polyethylen) ausgekleidet ist. Vor dem Abfüllen können die Verpackungen beispielsweise mittels Wasserstoffperoxid und anschließender Trocknung über 200°C entkeimt werden, um insgesamt eine aseptische Abfüllung zu ermöglichen.

Das Grundkonzept des erfindungsgemäßen Verfahrens zur Herstellung des neuartigen Milchproduktes liegt darin, Rahm und Gelatine zu mischen und anschließend in Verpackungen abzufüllen.

Um eine gute Haltbarkeit zu erzielen, können mehrere Behandlungsstufen vorgesehen werden: zunächst ist es günstig, den aus frischer Vollmilch hergestellten Rahm zu pasteurisieren, vorzugsweise bei einer Temperatur von 98°C.

Um eine innige Vermischung mit der Gelatine zu erzielen, kann diese Vermischung in einem Mischtank bei erhöhter Temperatur über 30°C, vorzugsweise bei etwa 40°C erfolgen. Danach ist es günstig, wenn man die zumindest Rahm und Gelatine enthaltende Mischung mindestens 1/2 Stunde quellen läßt.

Für die lange ungekühlte Haltbarkeit ist es besonders günstig, die Mischung vor dem Abfüllen in die Verpackungen ultrahoch zu erhitzen, auf eine Temperatur von über 130°C, vorzugsweise auf 138°C.

Um eine gleichmäßige Größe der Fetteilchen zu erhalten, ist bevorzugt vorgesehen, die Mischung bei erhöhter Temperatur mit hohem Druck zu homogenisieren.

Das neuartige Milchprodukt kann beispielsweise ein Mayonnaiseersatz sein. Mayonnaise findet in der modernen Küche vielfach Einsatz. Die Erfindung geht von der Überlegung aus, daß ein Gehalt an Eiern zwar Voraussetzung dafür ist, daß ein Lebensmittel als Mayonnaise bezeichnet wird, daß der Grund für die Verwendung von Mayonnaise jedoch deren cremige, streichfähige Konsistenz und deren Aussehen ist. Im Sinne des vielfach gemachten Vorschlages, den Einsatz von Eiern möglichst zu reduzieren, kann ein Mayonnaiseersatz geschaffen werden, welcher ohne die Verwendung von Eiern in etwa die gleiche Konsistenz hat wie echte Mayonnaise.

Überraschenderweise hat sich gezeigt, daß ein aus einem Milchbestandteil und Gelatine bestehendes Milchprodukt in relativ geringen Mengen - 5 % reichen ohne weiteres aus - geeignet ist, Tafelöl in eine cremige, streichfähige Substanz zu verwandeln.

In der Folge werden drei Beispiele beschrieben:

Aus frischer Vollmilch hergestellter Rahm mit 15% Fett wird pasteurisiert, bei 98°C (Peroxydase negativ). Anschließend kann eine Kühlung auf 4°C erfolgen. Zur eigentlichen Mischung des Rahms mit der Gelatine kann der Rahm in einem Mischtank auf 40°C angewärmt werden und dann mit einem Turbomischer, beispielsweise 1,2% hochplombige Gelatine eingerührt werden (alle Prozentangaben sind als Gewichtsprozentangaben zu verstehen). Danach läßt man die Mischung eine Stunde lang quellen, worauf eine Abkühlung auf 30°C erfolgt. Vor der Abfüllung in die Verpackungen erfolgt zur Erzielung einer großen Haltbarkeit eine UltrahochtemperaturErhitzung (UHT) auf ca. 138°C. Darauf kann noch eine Homogenisierung bei 60°C und 18MPa (180 bar) Druck erfolgen. Nach einer Abkühlung auf ca. 25°C kann dann die aseptische Abfüllung erfolgen. Darauf können acht Tage Quarantäne mit mikrobiologischer Kontrolle folgen.

Das so hergestellte neuartige Nahrungsmittel weist eine Mindesthaltbarkeit von 5 Monaten bei einer Lagerung bei Zimmertemperatur auf. Es eignet sich insbesondere als Halbfertigprodukt für die gewerbliche Küche, kann aber auch im privaten Bereich insbesondere als Fertigprodukt eingesetzt werden.

Bei einem zweiten Ausführungsbeispiel wird im wesentlichen gleich vorgegangen. Lediglich beim Mischprozess können 1,3% hochplombige Gelatine eingerührt werden und außerdem 11,4% Vanilleschotenextrakt (Vanilleschoten und Zucker) zugefügt werden. Das so hergestellte Nahrungsmittel ist ebenfalls ungekühlt lange haltbar und kann neben der gewerblichen Verwendung auch vorteilhaft privat genutzt werden. Insbesondere läßt sich dieses Ausführungsbeispiel des erfindungsgemäßen Milchproduktes aufgrund seines guten Geschmackes auch pur essen (Fertigprodukt).

Aus frischer Vollmilch hergestellter Rahm mit 15 % Fett wird pasteurisiert, bei 98°C (Peroxydase negativ). Anschließend kann eine Kühlung auf 4°C erfolgen. Zur eigentlichen Mischung des Rahms mit der Gelatine kann der Rahm in einem Mischtank auf 40°C angewärmt werden und dann mit einem Turbomischer, beispielsweise 1,2 % hochplombige Gelatine eingerührt werden (alle Prozentangaben sind als Gewichtsprozentangaben zu verstehen). Danach läßt man die Mischung eine Stunde lang quellen, worauf eine Abkühlung auf 30°C erfolgt. Vor der Abfüllung in die Verpackungen erfolgt zur Erzielung einer großen Haltbarkeit eine Ultrahochtemperaturerhitzung (UHT) auf ca. 138°C. Darauf kann noch eine Homogenisierung bei 60°C und 18MPa (180 bar) Druck erfolgen. Nach einer Abkühlung auf ca. 25°C kann dann die aseptische Abfüllung erfolgen. Darauf können acht Tage Quarantäne mit mikrobiologischer Kontrolle folgen.

Ein Teil des so hergestellten Milchproduktes wird gemixt und mit neun Teilen Tafelöl unter dauerndem Rühren zu einer cremigen, streichfähigen Masse verarbeitet, welche die Konsistenz von Mayonnaise aufweist, ohne jedoch Eier zu enthalten.

Anstelle von tierischen Fetten kann das Milchprodukt auch teilweise oder ganz pflanzliche Fette aufweisen und damit zu einer cholesterinbewußten Ernährung beitragen. Beispielsweise könnte das Milchprodukt Magermilch oder Sauerrahm enthalten, das mit pflanzlichem Fett angereichert ist.

Wenngleich der bevorzugte Fettgehalt des Milchproduktes unter 25% liegt, so können für spezielle Anwendungen, beispielsweise Soßen, auch Milchprodukte mit höherem Fettgehalt verwendet werden, beispielsweise solche, die aus Sauerrahm oder Süßrahm mit 44% Fett (Double-Rahm) bestehen.

## Patentansprüche

1. Nahrungsmittel mit schnittfähiger Konsistenz, welches ein Milchprodukt mit einem tierischen Fettanteil zwischen 10% und 20% und einen Gehalt zwischen 1% und 1,5% Gelatine enthält.

2. Nahrungsmittel nach Anspruch 1, dadurch gekennzeichnet, daß es frei von Aufschlaghilfen und unaufschlagbar ist.

3. Nahrungsmittel nach Anspruch 1 oder 2, dadurch gekennzeichnet, daß der Fettanteil des Milchproduktes bei etwa 15% liegt.

4. Nahrungsmittel nach einem der Ansprüche 1 bis 3, dadurch gekennzeichnet, daß das Milchprodukt Rahm, vorzugsweise mindestens 60% Rahm enthält.

5. Nahrungsmittel nach Anspruch 4, dadurch gekennzeichnet, daß das Milchprodukt mindestens 85% Rahm enthält.

6. Nahrungsmittel nach Anspruch 4 oder Anspruch 5, dadurch gekennzeichnet, daß der verwendete Rahm einen Fettanteil zwischen 10% und 20%, vorzugsweise 15% aufweist.

7. Nahrungsmittel nach einem der Ansprüche 1 bis 6, dadurch gekennzeichnet, daß das Milchprodukt nur aus Rahm und Gelatine besteht.

8. Nahrungsmittel nach einem der Ansprüche 1 bis 7, dadurch gekennzeichnet, daß es insgesamt nur aus Rahm und Gelatine besteht.

9. Nahrungsmittel nach einem der Ansprüche 1 bis 8, dadurch gekennzeichnet, daß es Zucker und Vanilleschoten enthält.

10. Nahrungsmittel nach Anspruch 9, dadurch gekennzeichnet, daß Zucker und Vanilleschoten zusammen zwischen 8% bis 15% ausmachen.

11. Nahrungsmittel nach einem der Ansprüche 1 bis 10, gekennzeichnet durch eine Lagerfähigkeit bei Zimmertemperatur von mindestens drei Monaten, vorzugsweise mindestens fünf Monaten.

12. Nahrungsmittel nach einem der Ansprüche 1 bis 11, dadurch gekennzeichnet, daß es aus dem Milchprodukt besteht.

13. Mayonnaiseersatz, dadurch gekennzeichnet, daß er zu 3% bis 30%, vorzugsweise zu 10% bis 20%, aus einem Milchprodukt, das mindestens 3% Fett und wenigstens 0,1% Gelatine enthält, und im übrigen aus Öl besteht.

14. Mayonnaiseersatz nach Anspruch 13, dadurch gekennzeichnet, daß das Milchprodukt mindestens 60% Rahm enthält, dessen Fettanteil vorzugsweise zwischen 10% und 25% liegt.

15. Mayonnaiseersatz nach Anspruch 13 oder 14, dadurch gekennzeichnet, daß das Öl Kernöl ist.

16. Mayonnaiseersatz nach einem der Ansprüche 13 bis 15, dadurch gekennzeichnet, daß er Knoblauch enthält.

17. Verwendung eines Nahrungsmittels nach einem der Ansprüche 1 bis 12, zur Herstellung eines Mayonnaiseersatzes, indem das vorzugsweise in schnittfähiger Form vorliegende Nahrungsmittel unter Zugabe von Öl in eine cremige streichfähige Form übergeführt wird.

18. Verfahren zum Herstellen eines Nahrungsmittels nach einem der Ansprüche 1 bis 12, dadurch gekennzeichnet, daß das Milchprodukt, vorzugsweise ein pasteurisierter Rahm, bei einer über 30°C liegenden, vorzugsweise bei 40°C liegenden Temperatur in einem Mischtank mit der Gelatine und gegebenenfalls weiteren Zutaten wie Zucker und Vanilleschoten vermischt wird, wobei man die zumindest einen aus Milch gewonnenen Bestandteil und Gelatine enthaltende Mischung nach dem Mischvorgang mindestens eine halbe Stunde quellen läßt, vorzugsweise bei erhöhter Temperatur von etwa 40°C.

19. Verfahren nach Anspruch 18, dadurch gekennzeichnet, daß die zumindest einen aus Milch gewonnenen Bestandteil und Gelatine enthaltende Mischung vor dem Abfüllen in die Verpackungen auf über 130°C, vorzugsweise auf 138°C, erhitzt wird.

20. Verwendung eines Nahrungsmittels nach einem der Ansprüche 1 bis 12 als Halbfertigprodukt.

## Claims

1. A foodstuff of cuttable consistency which contains a milk product with an animal fat proportion of between 10% and 20% and a content of between 1% and 1.5% gelatine.

2. A foodstuff as set forth in claim 1, characterised in that it is free from whipping aids and is unwhippable.

3. A foodstuff as set forth in claim 1 or 2, characterised in that the fat proportion of the milk product is about 15%.

4. A foodstuff as set forth in one of claims 1 to 3, characterised in that the milk product contains cream, preferably at least 60% cream.

5. A foodstuff as set forth in claim 4, characterised in that the milk product contains at least 85% cream.

6. A foodstuff as set forth in claim 4 or 5, characterised in that the cream used has a fat proportion of between 10% and 20%, preferably 15%.

7. A foodstuff as set forth in one of claims 1 to 6, characterised in that the milk product consists only of cream and gelatine.

8. A foodstuff as set forth in one of claims 1 to 7, characterised in that on the whole it only consists of cream and gelatine.

9. A foodstuff as set forth in one of claims 1 to 8, characterised in that it contains sugar and vanilla pods.

10. A foodstuff as set forth in claim 9, characterised in that sugar and vanilla pods together make up between 8 and 15%.

11. A foodstuff as set forth in one of claims 1 to 10, characterised by a storage capability at room temperature of at least three months, preferably at least five months.

12. A foodstuff as set forth in one of claims 1 to 11, characterised in that it consists of the milk product.

13. A mayonnaise substitute characterised in that it comprises 3% to 30%, preferably 10% to 20%, of a milk product which contains at least 3% fat and at least 0.1% gelatine, with the balance being oil.

14. A mayonnaise substitute as set forth in claim 13, characterised in that the milk product contains at least 60% cream whose fat proportion is preferably between 10% and 25%.

15. A mayonnaise substitute as set forth in claim 13 or 14, characterised in that the oil is kernel oil.

16. A mayonnaise substitute as set forth in one of claims 13 to 15, characterised in that it contains garlic.

17. Use of a foodstuff as set forth in one of claims 1 to 12 for the production of a mayonnaise substitute, whereby the foodstuff which is preferably in cuttable form is converted, with the addition of oil, into a creamy spreadable form.

18. A process for the production of a foodstuff as set forth in one of claims 1 to 12, characterised in that the milk product, preferably a pasteurised cream, is mixed at a temperature which is above 30°C, preferably at 40°C, in a mixing tank, with the gelatine and possibly further ingredients such as sugar and vanilla pods, wherein after the mixing operation the mixture containing at least one component obtained from milk and gelatine is left to swell for at least half an hour, preferably at elevated temperature of about 40°C.

19. A process as set forth in claim 18, characterised in that before being introduced into the packs, the mixture containing at least one component obtained from milk and gelatine is heated to over 130°C, preferably to 138°C.

20. Use of a foodstuff as set forth in one of claims 1 to 12 as a semi-finished product.

## Revendications

1. Produit alimentaire ayant une consistance permettant de le découper en portions, lequel contient un produit laitier avec une proportion de matière grasse animale comprise entre 10 % et 20 % et une teneur en gélatine comprise entre 1 % et 1,5 %.

2. Produit alimentaire selon la revendication 1, caractérisé en ce qu'il est dépourvu d'émulsifiants et ne peut être émulsifié.

3. Produit alimentaire selon la revendication 1 ou 2, caractérisé en ce que le pourcentage de matière grasse du produit laitier est d'environ 15 %.

4. Produit alimentaire selon l'une des revendications 1 à 3, caractérisé en ce que le produit laitier contient de la crème, de préférence au moins 60 % de crème.

5. Produit alimentaire selon la revendication 4, caractérisé en ce que le produit laitier contient au moins 85 % de crème.

6. Produit alimentaire selon la revendication 4 ou la revendication 5, caractérisé en ce que la crème employée présente un pourcentage de matière grasse compris entre 10 % et 20 %, de préférence 15 %.

7. Produit alimentaire selon l'une des revendications 1 à 6, caractérisé en ce que le produit laitier est constitué uniquement de crème et de gélatine.

8. Produit alimentaire selon l'une des revendications 1 à 7, caractérisé en ce qu'il est constitué globalement uniquement de crème et de gélatine.

9. Produit alimentaire selon l'une des revendications 1 à 8, caractérisé en ce qu'il contient du sucre et des gousses de vanille.

10. Produit alimentaire selon la revendication 9, caractérisé en ce que le sucre et les gousses de vanille représentent ensemble entre 8 % et 15 %.

11. Produit alimentaire selon l'une des revendications 1 à 10, caractérisé par une durée de conservation à température ambiante d'au moins trois mois, de préférence au moins cinq mois.

12. Produit alimentaire selon l'une des revendications 1 à 11, caractérisé en ce qu'il est constitué du produit laitier.

13. Succédané de mayonnaise, caractérisé en ce qu'il contient de 3 % à 30 %, de préférence de 10 % à 20 % d'un produit laitier, qui contient au moins 3 % de matière grasse et au moins 0,1 % de gélatine, et pour le reste est constitué d'huile.

14. Succédané de mayonnaise selon la revendication 13, caractérisé en ce que le produit laitier contient au moins 60 % de crème, dont le pourcentage de matière grasse est compris de préférence entre 10 % et 25 %.

15. Succédané de mayonnaise selon la revendication 13 ou 14, caractérisé en ce que l'huile est de l'huile de palmiste.

16. Succédané de mayonnaise selon l'une des revendications 13 à 15, caractérisé en ce qu'il contient de l'ail.

17. Utilisation d'un produit alimentaire selon l'une des revendications 1 à 12, pour la fabrication d'un succédané de mayonnaise, dans laquelle on transforme, avec adjonction d'huile, le produit alimentaire se présentant de préférence sous une forme permettant de le découper en portions, en une forme crémeuse que l'on peut tartiner.

18. Procédé de fabrication d'un produit alimentaire selon l'une des revendications 1 à 12, caractérisé en ce que le produit laitier, de préférence une crème pasteurisée, est mélangé dans une cuve de mélange à une température au-dessus de 30°C, de préférence à une température de 40°C, avec la gélatine et le cas échéant d'autres ingrédients comme le sucre ou les gousses de vanille, moyennant quoi on laisse le mélange, se composant au moins d'un composant issu du lait et de gélatine gonfler, après le processus de mélange, pendant au moins une demi-heure, de préférence à une température plus élevée d'environ 40°C.

19. Procédé selon la revendication 18, caractérisé en ce que le mélange, se composant au moins d'un composant issu du lait et de gélatine, est chauffé à plus de 130°C, de préférence 138°C avant d'être versé dans les emballages.

20. Utilisation d'un produit alimentaire selon l'une des revendications 1 à 12, en tant que produit semi-fini.
